# EUROPEAN PATENT SPECIFICATION

(11) **EP 1 939 246 B1**
(45) Date of publication and mention of the grant of the patent: **14.04.2010**
(21) Application number: 06027118.6
(22) Date of filing: 29.12.2006
(51) Int. Cl.: C08K 9/04, C08K 9/08, C08L 23/08, C08L 23/10, C08K 5/42, C08K 5/51, C08K 5/524, C08K 5/527, C08L 21/00

(54) **Polyolefin composition comprising silicon-containing filler**
Polyolefinzusammensetzung mit silikonhaltigem Füllstoff
Composition de polyoléfine comprenant un remplissage de silicon

(43) Date of publication of application: 02.07.2008
(73) Proprietor: Borealis Technology Oy, 06101 Porvoo (FI)
(72) Inventor: Machl, Doris, 4020 Linz (AT); Gahleitner, Markus, 4501 Neuhofen / Krems (AT); Pham, Tung, 4040 Linz (AT); Motha, Kshama, 00980 Helsinki (FI)
(74) Representative: Kador & Partner

(56) References cited:
- EP-A- 1 512 711
- EP-A- 1 734 079
- EP-A1- 0 324 430
- EP-A1- 1 304 354
- EP-A2- 0 351 142
- JP-A- 2003 231 690

## Description

The present invention relates to a polyolefin composition with improved mechanical strength, especially toughness and impact strength and heat resistance. Especially, the present invention relates to polyolefin compositions wherein a silicon compound-containing filler is strongly embedded in a polyolefin. The present invention further relates to an article made of the polyolefin composition and the use of the polyolefin composition for the production of an article.

Due to their chemical and thermal resistance as well as their mechanical strength polyolefin compositions are used in various applications such as moulding, film or other applications.

For demanding applications, e.g. under very low temperature conditions or for heavy duty packaging polyolefins used for these purposes often lack mechanical strength and heat resistance. Therefore, non-polymer reinforcement materials like mineral fillers, glass, or mineral fibres are incorporated in polyolefin compositions as modifiers. However, when using such mineral fillers the mechanical performance of such polyolefin compositions is often limited due to a low adhesion between the polymeric matrix and the filler. Especially the toughness, impact strength and elongation at break is severely lowered in such applications.

It is known in the prior art to use glass fibre reinforcements where the reinforcement takes place by chemical coupling via surface modification of the fibre with e.g. organosilicon compounds and the addition of a compatibiliser to the polymeric phase. An example for this technology is US 5,910,523 where an aminosilane functionalised filler (e.g. silica) is reacted with carboxyl groups of a carboxylated or maleated polyolefin to form a partially or fully polyolefin functionalised filler. However, such an approach requires specific chemistry and the results in mechanical strength are still poor.

JP-A-2138353 discloses a polymer composition comprising a propylene homopolymer or an ethylene-propylene copolymer, a silane coupling agent and an inorganic filler.

It is also known to use a non-treated filler with a polymeric compatibiliser to improve the properties of a polymer, especially polyolefin composition. J. Duchet et al report in J.Appl.Polym.Sci. 65 (1997) 2481-2492 on polyethylene grafting on glass surfaces wherein chlorosilane-terminated polyethylenes with different molar masses were provided to obtain semicrystalline polymers able to crystallise with the free chains of the polyethylene matrix and polymer chains could react with the glass surface. The technique was used for coating of silicon wafer surfaces.

Another approach in JP2004-051722 disclosing a polyolefin composite resin composition obtained by melt kneading a composition comprising (A) a phyllosilicate, (B) an interlayer dilating agent, and (C) a silane compound having an unsaturated bond and/or a reactive functional group with (D) a polyolefin resin. The melt tension and mouldability is improved by mixing such a specific filler to the polyolefin resin (D).

However, even in such cases of using surface modified or unmodified fillers mixed into polyolefin resin matrices, problems regarding a highly homogeneous dispersion are still experienced. Moreover, exfoliation is not prevented sufficiently to reach the theoretical potential of the materials. Moreover, the prior art has experienced severe problems when the final polymeric composition is put under mechanical load and/or deformation resulting in debonding and cavitation at the particle surface causing stress whitening and finally fracture of the composition.

Therefore, it is one object of the present invention to overcome the above problems and to provide a polyolefin composition having improved mechanical characteristics, in particular having improved toughness, impact strength and elongation at break, and improved bonding of the filler particles to the polyolefin matrix or parts thereof.

The present invention resides in the finding that a mineral filler can easily and safely be bonded to a polymeric matrix so that adhesion between filler and polymer is sharply improved. This can be achieved by chemically binding an inorganic mineral filler containing on its surface silanol groups or precursors thereof to polymer chains of a hydrolysable silicon group-containing polyolefin. Thus, a polyolefin composition improved in mechanical strength, especially toughness, impact strength and elongation at break can be obtained.

According to a first aspect of the present invention, a polyolefin composition is provided, comprising:a polyolefin base resin comprising
- a propylene homo- or copolymer (C) which forms a matrix phase, and
- a disperse phase which is dispersed in said matrix phase and comprises an olefin homo- or copolymer (A) having hydrolysable silicon-containing groups in an amount of from 0.1 to 50 wt%, based on the total olefin homo- or copolymer (A),
and an inorganic mineral filler (B) containing on its surface silanol groups or precursors thereof.

The term polyolefin denotes an olefin homo- or copolymer of a mixture of such olefin homo- or copolymers.

The polyolefin composition according to the present invention preferably comprises a silanol condensation catalyst capable of cross-linking the hydrolysable silicon group-containing polyolefin (A). Thus, the cross-linking reaction may be preferably carried out at a temperature of not more than 40 °C, more preferably not more than 30 °C, even more preferred at about room temperature. The cross-linking reaction may but need not be conducted in the presence of moisture.

Basically, the hydrolysable silicon-group containing polyolefin (A) may form a matrix in which the particulate filler is dispersed. As the polyolefin (A) contained in or forming the base resin an ethylene or propylene homo- or copolymer may be used.

Preferably, filler (B) is substantially encapsulated by the hydrolysable silicon-group containing polyolefin (A). Thus, the adhesion between filler and polyolefin is guaranteed and the homogeneity of the total composition is improved.

According to another aspect a heterophasic olefin polymer composition may be provided.

Thus, according to a preferred embodiment of the present invention the base resin comprises a propylene homo- or copolymer (C) which forms a matrix phase, and a disperse phase which is distributed in said matrix phase and comprises the polyolefin (A) having hydrolysable silicon-containing groups.

If such a heterophasic olefin polymer composition is provided, it is more preferred that the inorganic mineral filler (B) is present only in the dispersed phase.

An elastomer is usually and preferably contained in the disperse phase of the heterophasic olefin polymer. Such an elastomer may be any which is typically contained in heterophasic polypropylenes such as an ethylene-propylene copolymer and optionally other alpha-olefin copolymer. Suitable elastomers include ethylene-butene rubber, copolymer rubber such as ethylene-propylene rubber (EPR) or metallocene-catalyst based ethylene plastomers. Elastomer may also be added in the form of ethylene-propylene-diene monomer (EPDM) or styrene-based elastomers (e.g. SEBS). These elastomers can be prepared by conventional processes and blended into the heterophasic polymers of the invention by standard mixing techniques.

While elastomer and polyolefin (A) may be different polymers, in an embodiment of the invention the olefin homo- or copolymer (A) comprising hydrolysable silicon-containing groups is an elastomer.
According to this aspect of the present invention, a cross-linked heterophasic polypropylene composition may be provided which is obtainable by a process comprising the steps of:
(i) blending (A), (B) and (C) as defined above, together with a silanol condensation catalyst,
(ii) granulation of the blend of step (i) in a water bath, and afterwards
(iii) cross-linking the obtained heterophasic polypropylene composition at 10 to 40°C under a humidity of below 85 % to a cross-linking degree of at least 30 %, based on the total polyolefin (A).

Preferably, step (i) is carried out at a temperature of 180 to 230 °C and in step (ii) the residence time of the blend of step (i) in the water bath for granulation preferably is less than 30 seconds.

The selective cross-linking of the polyolefin phase allows stabilising of the phase morphology of the heterophasic polypropylene composition. The resulting heterophasic polypropylene compositions according to the present invention are additionally characterised by high heat deflection temperatures and improved scratch resistance resulting from the continuous matrix phase as well as a reduced shrinkage and improved surface quality resulting from the cross-linked polyolefin phase.

Such a heterophasic polypropylene composition preferably has a weight ratio of propylene homo- or copolymer (C) to polyolefin (A) from 97:3 to 45:55, more preferably from 95:5 to 45:55, still more preferably from 90:10 to 50:50, even more preferably from 85:15 to 60:40, and most preferably from 85:15 to 80:20.

Furthermore, such a heterophasic polypropylene composition preferably has a weight ratio of propylene homo- or copolymer matrix (C) to the dispersed phase of 95:5 to 45:55, more preferably from 90:10 to 50:50, even more preferably from 85:15 to 60:40.

Preferably, the inorganic mineral filler (B) is present in the composition in an amount of from 0.5 to 30 wt.%, more preferably from 1 to 25 wt.%, and most preferably from 1.5 to 15 wt.%.

In the embodiment where polyolefin base resin comprises a matrix and a dispersed phase, preferably at least 90 wt.% of inorganic filler (B) is present in the disperse phase, more preferably at least 95 wt.% and most preferably 100 wt.%.

The hydrolysable silicon-containing groups can be introduced e.g. by grafting the silicon compound into the polyolefin or by copolymerisation of the olefin monomers and silicon groups containing monomers. Such techniques are known e.g. from US 4,413,066, US 4,297,310, US 4,351,876, US 4,397,981, US 4,446,283 and US 4,456,704.

In the case the silicon group containing polyolefin (A) has been obtained by copolymerisation, the copolymerisation is preferably carried out with an unsaturated silicon compound represented by the formula

R¹SiR²_{q}Y_{3-q} (I)

wherein
R¹ is an ethylenically unsaturated hydrocarbyl, hydrocarbyloxy or (meth)acryloxy hydrocarbyl group,
R² is an aliphatic saturated hydrocarbyl group,
Y which may be the same or different, is a hydrolysable organic group and
q is 0, 1 or 2.

Special examples of the unsaturated silicon compound are those wherein R¹ is vinyl, allyl, isopropenyl, butenyl, cyclohexanyl or gamma-(meth)acryloxy propyl; Y is methoxy, ethoxy, formyloxy, acetoxy, propionyloxy or an alkyl-or arylamino group; and R², if present, is a methyl, ethyl, propyl, decyl or phenyl group.

A preferred unsaturated silicon compound is represented by the formula

CH₂=CHSi(OA)₃ (II)

wherein A is a hydrocarbyl group having 1-8 carbon atoms, preferably 1-4 carbon atoms.

The most preferred compounds are vinyl trimethoxysilane, vinyl bismethoxyethoxysilane, vinyl triethoxysilane, gamma-(meth)acryloxypropyltrimethoxysilane, gamma(meth)acryloxypropyltriethoxysilane, and vinyl triacetoxysilane.

The copolymerisation of the olefin and the unsaturated silane compound may be carried out under any suitable conditions resulting in the copolymerisation of the two monomers.

Moreover, the copolymerisation may be implemented in the presence of one or more other comonomers which can be copolymerised with the two monomers. Such comonomers include (a) vinyl carboxylate esters, such as vinyl acetate and vinyl pivalate, (b) alpha-olefins, such as propene, 1-butene, 1-hexane, 1-octene and 4-methyl-1-pentene, (c) (meth)acrylates, such as methyl(meth)acrylate, ethyl(meth)acrylate and butyl(meth)acrylate, (d) olefinically unsaturated carboxylic acids, such as (meth)acrylic acid, maleic acid and fumaric acid, (e) (meth)acrylic acid derivativs, such as (meth)acrylonitrile and (meth)acrylic amide, (f) vinyl ethers, such as vinyl methyl ether and vinyl phenyl ether, and (g) aromatic vinyl compounds, such as styrene and alpha-ethyl styrene.

Amongst these comonomers, vinyl esters of monocarboxylic acids having 1-4 carbon atoms, such as vinyl acetate, and (meth)acrylate of alcohols having 1-4 carbon atoms, such as methyl(meth)-acrylate, are preferred.

Especially preferred comonomers are butyl acrylate, ethyl acrylate and methyl acrylate.

Two or more such olefinically unsaturated compounds may be used in combination. The term "(meth)acrylic acid" is intended to embrace both acrylic acid and methacrylic acid. The comonomer content of the copolymer may amount to 70 wt% of the copolymer, preferably 0.5 to 35 wt%, most preferably 1 to 30 wt%.

The grafted polyolefin (A) may be produced e.g. by any of the two methods described in US 3,646,155 and US 4,117,195, respectively.

The silicon group containing polyolefin (A) according to the invention preferably comprises 0.1 to about 10 wt% of the silicon compound, more preferably 0.5 to 7 wt%, most preferably 1.0 to 4 wt% by weight, based on the total polyolefin (A).

Moreover, the silicon group containing polyolefin (A) has hydrolysable silicon-containing groups in an amount of from 0,1 to 50 wt%, based on the total olefin homo- or copolymer.

The silanol content can be adjusted by blending the grafted or copolymerised polyolefin with a non-modified polyolefin.

If the silicon groups are introduced in the polyolefin (A) by polymerisation, as described above, it is preferred that the silicon group containing polyolefin (A) has a density of 900 to 940 kg/m³, more preferred of 910 to 935 kg/m³, most preferred of 915 to 930 kg/m³.

Furthermore, it is preferred that the silicon-grafted polyolefin (A) has a density of 920 to 960 kg/m³, more preferred of 925 to 955 kg/m³, most preferred of 930 to 950 kg/m³.

Moreover, the used polyolefin (A) preferably is an ethylene homo- or copolymer, as a high density polyethylene, low density polyethylene, linear low density polyethylene.

According to another preferred embodiment a further olefin homo- or copolymer (D) may be present in the disperse phase which is compatible with the elastomer and the polyolefin (A) having hydrolysable silicon-containing groups. Such a further olefin polymer may be a high pressure polyethylene, e.g. a low density polyethylene, or ethylene copolymers like linear low density polyethylene, very low density polyethylene or metallocene-based ethylene plastomer. Addition of said component (D) will further increase toughness and impact strength, especially at temperatures below 0°C, and it will increase the extensibility expressed by the elongation at break.

The cross-linking reaction may preferably be carried out by any known silanol condensation catalyst. However, it is preferred that the silanol condensation catalyst is typically selected from the group comprising Lewis acids, inorganic acids such as sulphuric acid and hydrochloric acid, and organic acids such as citric acid, stearic acid, acetic acid, sulfonic acid and alkanoic acids as dodecanoic acid, organic bases, carboxylic acids and organometallic compounds including organic titanates and complexes or carboxylates of lead, cobalt, iron, nickel, zinc and tin or a precursor of any of the compounds mentioned.

Further preferred, the aromatic organic sulfonic acid comprises the structural element:

Ar(SO₃H)ₓ (III)

with Ar being an aryl group which may be substituted or non-substituted, and x being at least 1.

The organic aromatic sulfonic acid silanol condensation catalyst may comprise the structural unit according to formula (III) one or several times, e.g. two or three times. For example, two structural units according to formula (III) may be linked to each other via a bridging group such as an alkylene group.

Preferably, Ar is a aryl group which is substituted with at least one C₄- to C₃₀-hydrocarbyl group, more preferably C₄- to C₃₀-alkyl group.

Aryl group Ar preferably is a phenyl group, a naphthalene group or an aromatic group comprising three fused rings such as phenantrene and anthracene.

Preferably, in formula (III) x is 1, 2 or 3, and more preferably x is 1 or 2.

Furthermore, preferably the compound used as organic aromatic sulfonic acid silanol condensation catalyst has from 10 to 200 C-atoms, more preferably from 14 to 100 C-atoms.

In one preferred embodiment, Ar is a hydrocarbyl substituted aryl group and the total compound containing 14 to 28 carbon atoms, and still further preferred, the Ar group is a hydrocarbyl substituted benzene or naphthalene ring, the hydrocarbyl radical or radicals containing 8 to 20 carbon atoms in the benzene case and 4 to 18 atoms in the naphthalene case.

It is further preferred that the hydrocarbyl radical is an alkyl substituent having 10 to 18 carbon atoms and still more preferred that the alkyl substituent contains 12 carbon atoms and is selected from dodecyl and tetrapropyl. Due to commercial availability it is most preferred that the aryl group is a benzene substituted group with an alkyl substituent containing 12 carbon atoms.

The currently most preferred compounds are dodecyl benzene sulfonic acid and tetrapropyl benzene sulfonic acid.

The silanol condensation catalyst may also be precursor of the sulfonic acid compound, including all its preferred embodiments mentioned, i.e. a compound that is converted by hydrolysis to such a compound. Such a precursor is for example the acid anhydride of a sulfonic acid compound, or a sulfonic acid that has been provided with a hydrolysable protective group, as e.g. an acetyl group, which can be removed by hydrolysis.

In a second preferred embodiment, the sulfonic acid catalyst is selected from those as described in EP 1 309 631 and EP 1 309 632, namely
a) a compound selected from the group of
   (i) an alkylated naphthalene monosulfonic acid substituted with 1 to 4 alkyl groups wherein each alkyl group is a linear or branched alkyl with 5 to 40 carbons with each alkyl group being the same or different and wherein the total number of carbons in the alkyl groups is in the range of 20 to 80 carbons;
   (ii) an arylalkyl sulfonic acid wherein the aryl is phenyl or naphthyl and is substituted with 1 to 4 alkyl groups wherein each alkyl group is a linear or branched alkyl with 5 to 40 carbons with each alkyl group being the same or different and wherein the total number of carbons in the alkyl groups is in the range of 12 to 80;
   (iii) a derivative of (i) or (ii) selected from the group consisting of an anhydride, an ester, an acetylate, an epoxy blocked ester and an amine salt thereof which is hydrolysable to the corresponding alkyl naphthalene monosulfonic acid or the arylalkyl sulfonic acid;
   (iv) a metal salt of (i) or (ii) wherein the metal ion is selected from the group consisting of copper, aluminium, tin and zinc; and
b) a compound selected from the group of
   (i) an alkylated aryl disulfonic acid selected from the group consisting of the structure (IV): 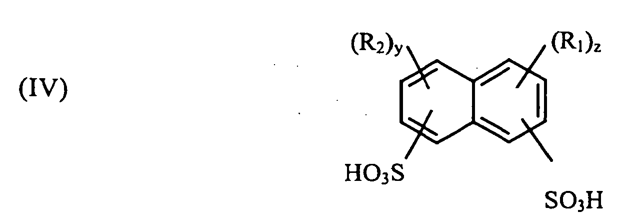 and the structure (V): 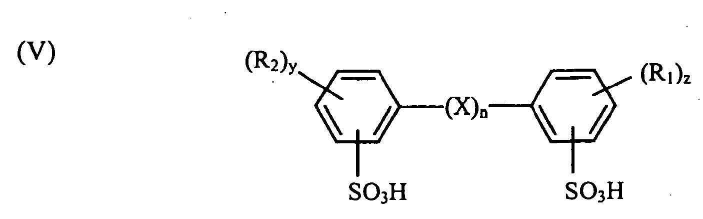 wherein each of R₁ and R₂ is the same or different and is a linear or branched alkyl group with 6 to 16 carbons, y is 0 to 3, z is 0 to 3 with the proviso that y + z is 1 to 4, n is 0 to 3, X is a divalent moiety selected from the group consisting of -C(R₃)(R₄)-, wherein each of R₃ and R₄ is H or independently a linear or branched alkyl group of 1 to 4 carbons and n is 1; -C(=O)-, wherein n is 1; -S-, wherein n is 1 to 3 and -S(O)₂-, wherein n is 1; and
   (ii) a derivative of (i) selected from the group consisting of the anhydrides, esters, epoxy blocked sulfonic acid esters, acetylates, and amine salts thereof which is a hydrolysable to the alkylated aryl disulfonic acid,
together with all preferred embodiments of those sulfonic acids as described in the mentioned European Patents.

Preferably, in the polyolefin composition the silanol condensation catalyst is present in an amount of 0.0001 to 6 wt%, more preferably of 0.001 to 2 wt%, and most preferably 0.02 to 0.5 wt%. It may also be used in an amount of from 0.05 to 1 wt%.

Preferably, the cross-linkable polyolefin (A) comprises, still more preferably consists of, a polyethylene containing hydrolysable silicon groups.

The hydrolysable silicon groups may be introduced into the polyolefin by copolymerisation of e.g. ethylene monomers with silicon group containing comonomers or by grafting, i.e. by chemical modification of the polymer by addition of silicon groups mostly in a radical reaction. Both techniques are well known in the art.

Moreover, the polyolefin composition according to the invention may further contain various additives, such as miscible thermoplastics, further stabilizers, lubricants, fillers, colouring agents and foaming agents, which can be added before during or after the blending step (i) to the composition.

As the silanol group-containing inorganic mineral filler (B) any type may be used. However, it is preferred to use a particulate or plate-like filler selected from the group consisting of the group talc, mica, montmorillonite, wollastonite, bentonite, silica, halloysite, kaolinite and other phyllosilicates.

In contrast to organically modified filler particles combined with a compatibiliser, the inventive polyolefin compositions include an inorganic mineral filler with silanol groups on their surfaces. Instead a group hydrolysable to such a silanol group may be present on the surface of the filler. Such groups are referred herein as "precursors" of silanol groups. These may be coupled by a suitable condensation reaction to hydrolysable silicon groups on the polymer chains of polyolefin (A), preferably with the use of a suitable silanol condensation catalyst as specified above. The reaction may but need not be conducted in the presence of moisture.

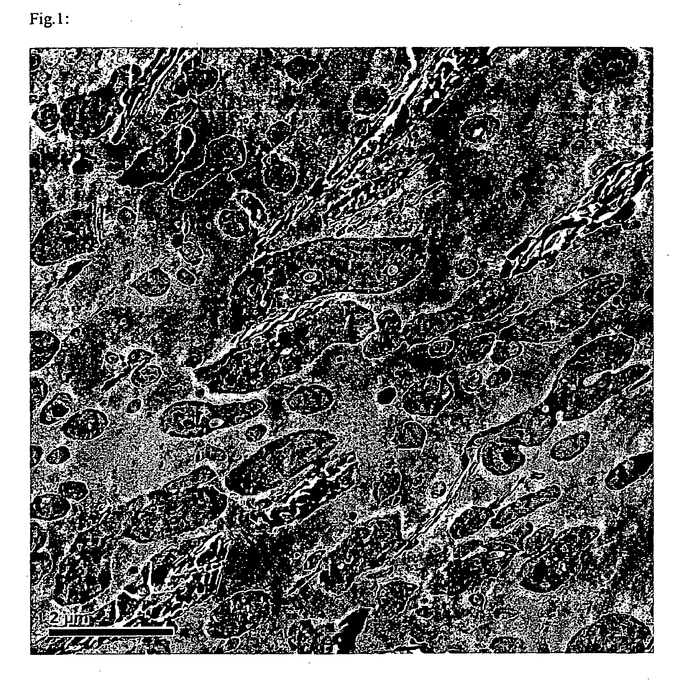

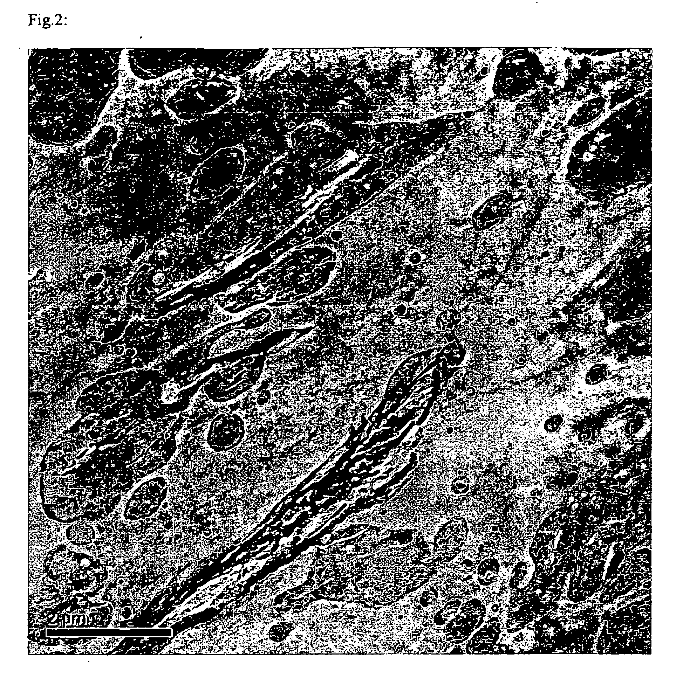

Fig. 1 and Fig. 2 exemplify the difference between the localisation of a filler in a conventional polypropylene impact copolymer where a low density polyethylene forms the disperse phase. It is evident from Fig. 1 that a discrete dispersion separate from the polymeric phases is formed showing that the filler particles are not homogeneously included in the polymeric phase which leads to the above discussed disadvantages.

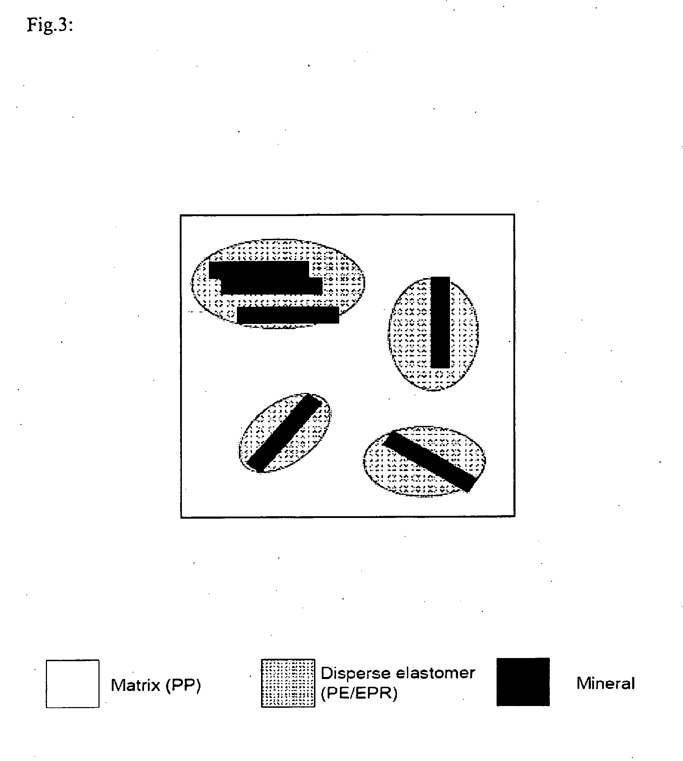

On the other hand, Fig. 2 shows a reinforced heterophasic polypropylene composition according to a specifically preferred embodiment of the present invention where the filler particles are homogeneously and completely encapsulated in the dispersed phase which is formed by a polyethylene composition in which silicon functional groups are cross-linked with silanol groups on the surface of the particulate filler. It can be further seen that the filler is present only in the dispersed phase. This specifically preferred structure of the inventive heterophasic polyolefin composition is schematically illustrated in Fig. 3.

It will be shown in the example section below that the reinforced polyolefin compositions according to the present invention show highly improved mechanical properties such as Charpy notched impact strength, scratch resistance and elongation at break. It was further surprisingly found that the inventive polyolefin compositions showed a significantly reduced gloss achieving an aesthetically attractive surface appearance.

Thus, the reinforced polyolefin compositions according to the present invention preferably have an impact strength at +23°C of at least 5.5 kJ/m² and at -20°C of at least 2.0 kJ/m² in a Charpy notched impact strength test according to ISO 179 1eA.

Moreover, the inventive polyolefin compositions preferably have a flexural modulus of not less than 950 MPa, preferably not less than 1000 MPa and even more preferably not less than 1200 MPa, measured according to ISO 178.

The inventive polyolefin compositions preferably further show an elongation at break of at least 10%, preferably at least 20%, even more preferably at least 50%, measured according to ISO 527.

The inventive polyolefin compositions preferably show a gloss at 20° of not more than 50%, preferably not more than 40%, even more preferred not more than 30%, measured according to ISO 2813.

The inventive polyolefin compositions are further improved in scratch resistance. They preferably show a scratch resistance, expressed as delta (L) of at least 3.5, preferably at least 4.0, even more preferred at least 4.5. Scratch resistance is expressed as delta (L) and measured according to the following procedure: A cross hatch grid is cut on the grained surface of an injection-moulded specimen using a steel ball tip tool. The difference in light reflection - delta (L) - is then measured with a spectral photometer.

The present invention will now be further described by means of the following non-limiting examples and comparative examples, and with reference to the figures.
Fig. 1 shows a conventional polypropylene impact copolymer with a discrete dispersion of a mineral filler separate from the disperse phase.
Fig. 2 shows an embodiment of the polyolefin composition according to the present invention where the mineral filler particles are encapsulated in the disperse phase made of a silicon group containing ethylene vinyl-silane copolymer.
Fig. 3 is a schematic illustration of the embodiment according to Fig. 2.

### Examples

### 1. Definitions

### a) Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR₂ of polypropylene is determined at a temperature of 230 °C and a load of 2.16 kg, the MFR₅ of polyethylene is measured at a temperature 190 °C and a load of 5 kg and the MFR₂ of polyethylene at a temperature 190 °C and a load of 2.16 kg.

### b) Xylene insolubles

The content of xylene hot insolubles is determined by extracting 1 g of finely cut polymer sample with 500 ml xylene in a Soxleth extractor for 48 hours at the boiling temperature. The remaining solid amount is dried at 90 °C and weighed for determining the insolubles amount.

### c) Charpy notched impact test

The impact strength is determined as Charpy Impact Strength according to ISO 179 1 eA at +23°C and at -20 °C on injection moulded specimens of 80x10x4 mm³.

### d) Tensile test

Tensile tests are performed according to ISO 527 using injection moulded specimen as described in EN ISO 1873-2 (dog bone shape, 4 mm thickness).

Tensile modulus (E-modulus) was also determined according to ISO 527 and calculated from the linear part of the tensile test results.

### e) Flexural Modulus

The flexural modulus is measured according ISO 178 using injection moulded specimens of 80 x 10 x 4 mm³.

### f) Density

The density is measured according to ISO 1183.

### g) Elongation at break

The elongation at break was also determined according to ISO 527.

### h) Gloss

Gloss was determined on injection moulded specimens of 60 x 60 x 2 mm³ according to ISO 2813.

### i) Scratch resistance

A plate of 3 mm thickness with a fine-grained surface (type N111) is produced by injection moulding. With an Erichsen Cross Hatch Cutter model 420p, a cross hatch grid of 40 x 40 mm² (line distance 2 mm in both directions) is cut on the grained surface using the standardised Erichsen steel ball tip tool (1 mm diameter) with a force of 10 N and a cutting speed of 1000 mm/min. The difference in light reflection - delta (L) - is then measured with a spectral photometer. Better scratch resistance is expressed by lower scratch visibility and correspondingly a smaller delta(L) value

### 2. Materials

The components - propylene homo- or copolymer, polyethylene-vinylsilane-copolymer or grafting product and the catalyst master batch (Borealis polyethylene CAT-MB50 or CAT-MB 25 with dibutyltin dilaurate as catalytically active substance), were combined in a twin screw extruder (PRISM TSE24, L/D ratio 40) with two high intensity mixing segments at temperatures between 190 and 220°C at a through put off of 10 kg/h and a screw speed of 50 rpm. The material was extruded to two circular dies of 3mm diameter into water base with a residence time of at least 30 sec for solidifying the melt standard, which was consequently granulated. For the period until melt processing, the resulting compound was stored at an ambient temperature of + 23 ± 2 °C and normal humidity (50 ± 5%).

Masterbatch compositions were produced as follows:
(a) 50 wt.% of an ethylene-propylene random copolymer with MFR (230°C/2.16 kg) of 8 g / 10 min, an ethylene content of 6 wt% and a density of 905 kg/m³. were blended with 47.5 wt% silicon group containing polyethylene LE4481 and 2.5 wt% CAT-MB50, or
(b) 75 wt.% of the same ethylene-propylene random copolymer were blended with 23.75 wt % silicon group containing polyethylene LE4481 and 1.25 wt% CAT-MB25,
to obtain two masterbatch compositions containing (a) 50 wt.% and (b) 25 wt% of the silicon group-containing polyethylene.

### Compounds:

All used polymers are commercially available by Borealis Polyolefine GmbH:
**PPX104** is a heterophasic propylene-ethylene copolymer with MFR (230°C/2.16 kg) of 31 g / 10 min, an EPR content of 20 wt% and a density of 905 kg/m³.
**BG055A1** is a heterophasic propylene-ethylene impact copolymer with MFR (230°C/2.16 kg) of 22 g / 10 min, an EPR content of 18 wt% and a density of 905 kg/m³.
**FB5150** is a linear low density polyethylene (LLDPE) with MFR (190°C/2.16 kg) of 1.5 g / 10 min , and a density of 915 kg/m³.
**FT7239** is a low density polyethylene (LDPE) with MFR (190°C/2.16 kg) of 3 g / 10 min, and a density of 929 kg/m³.
**HE2545** is a silane-grafted high density polyethylene (HDPE) with MFR (190°C/2.16kg) of 6 g / 10 min, a density of 955 kg/m³ and a silanol content of 1.5 wt%.
**Visico LE4481** is a high-pressure low density ethylene copolymer with vinyl silane content for cable insulation with MFR (190°C/2.16 kg) of 5 g / 10 min , a silanol content of 1.75 wt% and a density of 927 kg/m³.
**Visico LE4423** is a high-pressure low density ethylene copolymer with vinyl silane content for cable insulation with MFR (190°C/2.16 kg) of 1 g / 10 min , a silanol content of 1.35 wt% and a density of 923 kg/m³.
**"Talc"** is Tital 15, manufactured by Ankerpoort NV having a top-cut particle size of 7 µm (95% of particles below that size, according to ISO 787-7) and a weight average particle size of 2 µm as determined according to ISO 13317-1.

### Example 1:

87.75 wt% PPX104 as matrix phase, 2.0 wt% LE4481 as silane-copolymerised polyethylene, 10.0 wt.% talc and 0.25 wt% catalyst master batch CAT-MB50 are used.

### Example 2:

87.75 wt% PPX104 as matrix phase, 2.0 wt% LE4423 as silane-copolymerised polyethylene, 10.0 wt.% talc and 0.25 wt% catalyst master batch CAT-MB50 are used.

### Example 3:

84.75 wt% PPX104 as matrix phase, 5.0 wt% LE4423 as silane-copolymerised polyethylene, 10.0 wt.% talc and 0.25 wt% catalyst master batch CAT-MB50 are used.

### Example 4:

79.75 wt% PPX104 as matrix phase, 10.0 wt% LE4423 as silane-copolymerised polyethylene, 10.0 wt.% talc and 0.25 wt% catalyst master batch CAT-MB50 are used.

### Example 5:

79.75 wt% PPX104 as matrix phase, 5.0 wt.% FB5150, 5.0 wt% LE4423 as silane-copolymerised polyethylene, 10.0 wt.% talc and 0.25 wt% catalyst master batch CAT-MB50 are used.

### Example 6:

79.75 wt% BG055A1 as matrix phase, 10.0 wt% HE2545 as silane-grafted polyethylene, 2.5 wt.% talc and 0.25 wt% catalyst master batch CAT-MB50 are used.

### Comparative Example 1:

Only PPX 104 is used.

### Comparative Example 2:

90.0 wt% PPX104 without additional dispersed phase, and 10.0 wt.% talc are used.

### Comparative Example 3:

80.0 wt% PPX104 as matrix phase, 10.0 wt% FT7239 as a dispersed polyethylene without silane groups, and 10.0 wt.% talc are used.

### Comparative Example 4:

90.0 wt% BG055A1 and 10.0 wt.% talc are used.

The results are shown in Table 1 below.

**Table 1**

| | **Base polymer** - | **Filler type** - | **amount wt%** | **PE type** - | **amount wt%** | **PE-SiOX type** - | **amount wt%** | **MFR 230°C/2,16kg g/10min** | **Flex.Test* Modulus MPa** | **Charpy NIS**** | | **Gloss 20° %** | **Scratch Delta(L)** - |
|---|---|---|---|---|---|---|---|---|---|---|---|---|---|
| | | | | | | | | | | **+ 23°C - kJ/m²** | **20°C kJ/m²** | | |
| **EX1** | PPX104 | talc*** | 10 | none | 0 | LE4481 | 2 | 23 | 1071 | 7,0 | 3,7 | 30 | 4,6 |
| **EX2** | PPX104 | talc*** | 10 | none | 0 | LE4423 | 2 | 23 | 1192 | 6,6 | 3,5 | 30 | 4,5 |
| **EX3** | PPX104 | talc*** | 10 | none | 0 | LE4423 | 5 | 20 | 1008 | 6,8 | 3,8 | 19 | 4,3 |
| **EX4** | PPX104 | talc*** | 10 | none | 0 | LE4423 | 10 | 16 | 970 | 8,1 | 3,9 | 14 | 3,9 |
| **EX5** | PPX104 | talc*** | 10 | FB5150 | 5 | LE4423 | 5 | 21 | 1009 | 8 | 3,8 | 20 | 3,8 |
| **EX6** | BG055AI | talc*** | 2,5 | none | 0 | HE2545 | 10 | 14,7 | 1602 | 5,6 | 2 | - | - |
| | | | | | | | | | | | | | |
| **CE1** | PPX 104 | none | 0 | none | 0 | none | 0 | 31 | 1042 | 5,0 | 2,6 | 62 | 2,2 |
| **CE2** | PPX 104 | talc*** | 10 | none | 0 | none | 0 | 25 | 1635 | 5,1 | 2,4 | 41 | 4,8 |
| **CE3** | PPX 104 | talc*** | 10 | FT7239 | 10 | none | 0 | 22 | 1456 | 5,8 | 2,7 | 38 | 4,5 |
| **CE4** | BG055AI | talc*** | 2,5 | none | 0 | none | 0 | 20 | 1923 | 4,3 | 1,7 | - | - |

| | | | | | | | | | | | | | |
|---|---|---|---|---|---|---|---|---|---|---|---|---|---|
| * ISO 178 *** Tital15 from Ankerpoort NV, top cut 7 µm ** ISO 179 1eA PPX 104 - Experimental PP grade with 20 wt% EPR LE4481 - "Visico" type high pressure VTMS copolymer, density 927 kg/m³ LE4423 - "Visico" type high pressure VTMS copolymer, density 923 kg/m³ FT7239 - LDPE, density 0.929 FB5150 - LLDPE, density 0.915 BG055AI - PP impact copolymer HE2545 - VTMS-grafted HDPE, density 955 kg/m³ | | | | | | | | | | | | | |

## Claims

1. A polyolefin composition comprising:
- a polyolefin base resin comprising
• a propylene homo- or copolymer (C) which forms a matrix phase, and
• a disperse phase which is dispersed in said matrix phase and comprises an olefin homo- or copolymer (A) having hydrolysable silicon-containing groups in an amount of from 0.1 to 50 wt%, based on the total olefin homo- or copolymer (A),
and an inorganic mineral filler (B) containing on its surface silanol groups or precursors thereof.

2. The polyolefin composition according to claim 1, wherein said composition further comprises a silanol condensation catalyst.

3. The polyolefin composition according to claim 2, wherein the silanol condensation catalyst is selected from the group consisting of inorganic acids such as sulphuric acid and hydrochloric acid, organic acids such as citric acid, stearic acid, acetic acid, sulphonic acid and alkanoic acids as dodecanoic acid, organic bases, carboxylic acids, organometallic compounds including organic titanates and complexes or carboxylates of lead, cobalt, iron, nickel, zinc and tin or a precursor of these compounds.

4. The polyolefin composition according to any of claims 1 to 3, wherein the hydrolysable silicon group-containing olefin homo- or copolymer (A) is an ethylene homo- or copolymer.

5. The polyolefin composition according to claim 4, wherein the disperse phase further comprises an elastomer, different from the olefin homo- or copolymer (A).

6. The polyolefin composition according to claim 4 or 5, wherein the inorganic mineral filler (B) is present only in the disperse phase.

7. The polyolefin composition according to any of claims 4 to 6, wherein the composition is obtainable by a process for the preparation of a crosslinked heterophasic polypropylene composition, comprising the steps of:
i. blending (A) and (C) together with a silanol condensation catalyst,
ii. granulation of the blend of step (i) in a water bath, and afterwards
iii. cross-linking the obtained heterophasic polypropylene composition at 10 to 40 °C under a humidity of below 85 % to a cross-linking degree of at least 30 %, based on the total olefin homo- or copolymer (A).

8. The polyolefin composition according to claim 7, wherein step (i) is carried out at a temperature of 180 to 230 °C.

9. The polyolefin composition according to claim 7, wherein for granulation the residence time of the blend of step (i) in the water bath is less than 30 seconds.

10. The polyolefin composition according to any of claims 1, 5 to 9, wherein the weight ratio of propylene homo- or copolymer (C) to olefin homo- or copolymer (A) is from 95:5 to 45:55.

11. The polyolefin composition according to any of the preceding claims, wherein olefin homo- or copolymer (A) is silicon-grafted and has a density of 920 to 960 kg/m³ (ISO 1183).

12. The polyolefin composition according to any of claims 1 to 11, wherein olefin homo- or copolymer (A) is obtained by a polymerisation of olefin monomers and silicon group-containing monomers and has a density of 900 to 940 kg/m³.

13. The polyolefin composition according to any of the preceding claims, wherein the inorganic mineral filler (B) is selected from the group consisting of talc, mica, montmorillonite, wollastonite, bentonite, silica, and phyllosilicate.

14. The polyolefin composition according to any of claims 1, 5 to 13, wherein the disperse phase comprises a further olefin homo- or copolymer (D) compatible with the olefin homo- or copolymer (A), the olefin homo- or copolymer (D) being selected from high pressure polyethylenes or metallocene-based ethylene plastomers.

15. The polyolefin composition according to any of the preceding claims, wherein the hydrolysable silicon-containing groups are introduced into the olefin homo- or copolymer (A) by copolymerisation with an unsaturated silicon-compound represented by the formula:
R¹SiR²_{q}Y_{3-q} (IV)
wherein
R¹ is an ethylenically unsaturated hydrocarbyl, hydrocarbyloxy or (meth)acryloxy hydrocarbyl group,
R² is an aliphatic saturated hydrocarbyl group,
Y which may be the same or different, is a hydrolysable organic group and
q is 0, 1 or 2.

16. The polyolefin composition according to any of the preceding claims, wherein the composition has been subjected to the presence of moisture.

17. The polyolefin composition according to any of the preceding claims, wherein the composition has an impact strength at + 23 °C of at least 5.5 kJ/m² in a Charpy notched test according to ISO 179 1eA.

18. The polyolefin composition according to any of the preceding claims, wherein the composition has an impact strength at -20 °C of at least 2.0 kJ/m², in a Charpy notched test according to ISO 179 1eA.

19. The polyolefin composition according to any of the preceding claims, wherein the composition has a flexural modulus of not less than 950 MPa, measured according to ISO 178.

20. The polyolefin composition according to any of the preceding claims, wherein the composition has an elongation at break of at least 10%, measured according to ISO 527.

21. The polyolefin composition according to claim 20, wherein the composition has an elongation at break of at least 20%, measured according to ISO 527.

22. The polyolefin composition according to any of the preceding claims, wherein the composition has a scratch resistance, expressed as delta (L) of at least 3.5, preferably at least 4.0.

23. An article made of the polyolefin composition according to any of claims 1 to 22.

24. Use of the polyolefin composition according to any of claims 1 to 22 for the production of an article.

## Patentansprüche

1. Polyolefinzusammensetzung, umfassend:
ein Polyolefingrundharz, umfassend
• ein Propylenhomo- oder -copolymer (C), das eine Matrixphase bildet, und
• eine disperse Phase, die in der Matrixphase dispergiert ist und ein Olefinhomo- oder -copolymer (A) mit hydrolysierbaren siliciumhaltigen Gruppen einer Menge von 0,1 bis 50 Gew.-% umfaßt, und zwar auf das gesamte Olefinhomo- oder -copolymer (A) bezogen,
und einen anorganischen mineralischen Füllstoff (B), der auf seiner Oberfläche Silanolgruppen oder Vorläuferverbindungen davon enthält.

2. Polyolefinzusammensetzung nach Anspruch 1, wobei die Zusammensetzung ferner einen Silanolkondensationskatalysator umfaßt.

3. Polyolefinzusammensetzung nach Anspruch 2, wobei der Silanolkondensationskatalysator aus der Gruppe ausgewählt ist, bestehend aus anorganischen Säuren, wie Schwefelsäure und Salzsäure, organischen Säuren, wie Citronensäure, Stearinsäure, Essigsäure, Sulphonsäure, und Alkansäuren, wie Dodecansäure, organischen Basen, Carbonsäuren, metallorganischen Verbindungen, einschließlich organischen Titanaten, und Komplexen oder Carboxylaten von Blei, Cobalt, Eisen, Nickel, Zink und Zinn oder einer Vorläuferverbindung dieser Verbindungen.

4. Polyolefinzusammensetzung nach einem der Ansprüche 1 bis 3, wobei das hydrolysierbare Siliciumgruppen enthaltende Olefinhomo- oder -copolymer (A) ein Ethylenhomo- oder -copolymer ist.

5. Polyolefinzusammensetzung nach Anspruch 4, wobei die disperse Phase ferner ein Elastomer umfaßt, das vom Olefinhomo- oder -copolymer (A) verschieden ist.

6. Polyolefinzusammensetzung nach Anspruch 4 oder 5, wobei der anorganische mineralische Füllstoff (B) nur in der dispersen Phase vorliegt.

7. Polyolefinzusammensetzung nach einem der Ansprüche 4 bis 6, wobei die Zusammensetzung nach einem Verfahren zur Herstellung einer vernetzten Polypropylenzusammensetzung mit verschiedenen Phasen erhalten werden kann, das die folgenden Schritte umfaßt:
i. Mischen von (A) und (C) zusammen mit einem Silanolkondensationskatalysator,
ii. Granulieren des Gemischs vom Schritt (i) in einem Wasserbad und anschließend
iii. Vernetzen der erhaltenen Polypropylenzusammensetzung mit verschiedenen Phasen bei 10 bis 40°C unter einer Feuchte von weniger als 85 % bis zu einem Vernetzungsgrad von mindestens 30 %, und zwar auf das gesamte Olefinhomo- oder -copolymer (A) bezogen.

8. Polyolefinzusammensetzung nach Anspruch 7, wobei der Schritt (i) bei einer Temperatur 180 bis 230°C erfolgt.

9. Polyolefinzusammensetzung nach Anspruch 7, wobei beim Granulieren die Verweilzeit des Gemischs vom Schritt (i) im Wasserbad weniger als 30 Sekunden beträgt.

10. Polyolefinzusammensetzung nach einem der Ansprüche 1, 5 bis 9, wobei das Gewichtsverhältnis zwischen dem Propylenhomo- oder -copolymer (C) und dem Olefinhomo- oder -copolymer (A) 95:5 bis 45:55 beträgt.

11. Polyolefinzusammensetzung nach einem der vorstehenden Ansprüche, wobei das Olefinhomo- oder -copolymer (A) mit Silicium gepfropft ist und eine Dichte von 920 bis 960 kg/m³ (ISO 1183) aufweist.

12. Polyolefinzusammensetzung nach einem der Ansprüche 1 bis 11, wobei das Olefinhomo- oder -copolymer (A) durch Polymerisieren von Olefinmonomeren und Siliciumgruppen enthaltenden Monomeren erhalten wird und eine Dichte von 900 bis 940 kg/m³ aufweist.

13. Polyolefinzusammensetzung nach einem der vorstehenden Ansprüche, wobei der anorganische mineralische Füllstoff (B) aus der Gruppe ausgewählt ist, die aus Talkum, Glimmer, Montmorillonit, Wollastonit, Bentonit, Siliciumdioxid und Phyllosilicat besteht.

14. Polyolefinzusammensetzung nach einem der Ansprüche 1, 5 bis 13, wobei die disperse Phase ein weiteres Olefinhomo- oder -copolymer (D) umfaßt, das mit dem Olefinhomo- oder -copolymer (A) kompatibel ist, wobei das Olefinhomo- oder -copolymer (D) aus Hochdruckpolyethylenen oder auf Metallocen basierenden Ethylenplastomeren ausgewählt ist.

15. Polyolefinzusammensetzung nach einem der vorstehenden Ansprüche, wobei die hydrolysierbaren, siliciumenthaltigen Gruppen durch Copolymerisation mit einer ungesättigten siliciumhaltigen Verbindung der nachfolgenden Formel in das Olefinhomo- oder -copolymer (A) eingeführt werden:
R¹SiR²_{q}Y_{3-q} (IV)
worin
R¹ ein ethylenisch ungesättigter Kohlenwasserstoff-, Hydrocarbyloxy- oder (Meth)acryloxyhydrocarbylrest ist,
R² ein aliphatischer gesättigter Kohlenwasserstoffrest ist,
Y, das gleich oder verschieden sein kann, ein hydrolysierbarer organischer Rest ist, und
q gleich 0, 1 oder 2 ist.

16. Polyolefinzusammensetzung nach einem der vorstehenden Ansprüche, wobei die Zusammensetzung der Gegenwart von Feuchtigkeit ausgesetzt worden ist.

17. Polyolefinzusammensetzung nach einem der vorstehenden Ansprüche, wobei die Zusammensetzung bei einem Charpy-Kerbschlagzähigkeitstest gemäß ISO 179 1eA eine Kerbschlagzähigkeit bei +23°C von mindestens 5,5 kJ/m² aufweist.

18. Polyolefinzusammensetzung nach einem der vorstehenden Ansprüche, wobei die Zusammensetzung bei einem Charpy-Kerbschlagzähigkeitstest gemäß ISO 179 1eA eine Kerbschlagzähigkeit bei -20°C von mindestens 2,0 kJ/m² aufweist.

19. Polyolefinzusammensetzung nach einem der vorstehenden Ansprüche, wobei die Zusammensetzung einen Biegemodul von nicht weniger als 950 MPa aufweist, und zwar gemäß ISO 178 gemessen.

20. Polyolefinzusammensetzung nach einem der vorstehenden Ansprüche, wobei die Zusammensetzung eine Reißdehnung von mindestens 10 % aufweist, und zwar gemäß ISO 527 gemessen.

21. Polyolefinzusammensetzung nach Anspruch 20, wobei die Zusammensetzung eine Reißdehnung von mindestens 20 % aufweist, und zwar gemäß ISO 527 gemessen.

22. Polyolefinzusammensetzung nach einem der vorstehenden Ansprüche, wobei die Zusammensetzung eine Kratzfestigkeit, als δ (L) angegeben, von mindestens 3,5, vorzugsweise von mindestens 4,0 aufweist.

23. Gegenstand, der aus der Polyolefinzusammensetzung nach einem der Ansprüche 1 bis 22 hergestellt wurde.

24. Verwendung der Polyolefinzusammensetzung nach einem der Ansprüche 1 bis 22 für die Herstellung eines Gegenstandes.

## Revendications

1. Composition de polyoléfine comprenant :
une résine de base de polyoléfine comprenant
un homo- ou copolymère de propylène (C) qui forme une phase matricielle, et
une phase dispersée qui est dispersée dans ladite phase matricielle et comprend un homo- ou copolymère d'oléfine (A) ayant des groupes hydrolysables contenant du silicium dans une quantité de 0,1 % à 50 % en poids, par rapport à la totalité d'homo- ou copolymère d'oléfine (A),
et une charge minérale inorganique (B) contenant sur sa surface des groupes silanols ou leurs précurseurs.

2. Composition de polyoléfine selon la revendication 1, dans laquelle ladite composition comprend en outre un catalyseur de condensation de silanol.

3. Composition de polyoléfine selon la revendication 2, dans laquelle le catalyseur de condensation de silanol est choisi parmi le groupe consistant en acides inorganiques tels que l'acide sulfurique et l'acide chlorhydrique, en acides organiques tels que l'acide citrique, l'acide stéarique, l'acide acétique, l'acide sulfonique et en acides alcanoïques tels que l'acide dodécanoïque, en bases organiques, acides carboxyliques, composés organométalliques comprenant des titanates organiques et en complexes ou carboxylates de plomb, cobalt, fer, nickel, zinc et étain ou un précurseur de ces composés.

4. Composition de polyoléfine selon l'une quelconque des revendications 1 à 3, dans laquelle l'homo- ou copolymère d'oléfine (A) contenant des groupes hydrolysables de silicium est un homo- ou copolymère d'éthylène.

5. Composition de polyoléfine selon la revendication 4, dans laquelle la phase dispersée comprend en outre un élastomère, différent de l'homo- ou copolymère d'oléfine (A).

6. Composition de polyoléfine selon la revendication 4 ou 5, dans laquelle la charge minérale inorganique (B) est présente uniquement dans la phase dispersée.

7. Composition de polyoléfine selon l'une quelconque des revendications 4 à 6, dans laquelle la composition peut être obtenue par un procédé pour la préparation d'une composition de polypropylène hétérophasique réticulée, comprenant les étapes de :
i) mélange de (A) et (C) conjointement avec un catalyseur de condensation de silanol,
ii) granulation du mélange de l'étape (i) dans un bain d'eau, et ensuite
iii) réticulation de la composition de polypropylène hétérophasique à 10°C à 40°C sous une humidité inférieure à 85 % à un degré de réticulation d'au moins 30 %, par rapport à la totalité de l'homo- ou copolymère d'oléfine (A).

8. Composition de polyoléfine selon la revendication 7, dans laquelle l'étape (i) est réalisée à une température de 180°C à 230°C.

9. Composition de polyoléfine selon la revendication 7, dans laquelle pour la granulation le temps de séjour du mélange de l'étape (i) dans le bain d'eau est de moins de 30 secondes.

10. Composition de polyoléfine selon l'une quelconque des revendications 1, 5 à 9, dans laquelle le rapport en poids de l'homo- ou copolymère de propylène (C) par rapport à l'homo- ou copolymère d'oléfine (A) est de 95 : 5 à 45 : 55.

11. Composition de polyoléfine selon l'une quelconque des revendications précédentes, dans laquelle l'homo- ou copolymère d'oléfine (A) est greffé par du silicium et présente une masse volumique de 920 à 960 kg/m³ (ISO 1183).

12. Composition de polyoléfine selon l'une quelconque revendication 1 à 11, dans laquelle l'homo- ou copolymère d'oléfine (A) est obtenu par une polymérisation de monomères d'oléfine et de monomères contenant des groupes silicium et présente une masse volumique de 900 à 940 kg/m³.

13. Composition de polyoléfine selon l'une quelconque des revendications précédentes, dans laquelle la charge minérale inorganique (B) est choisie parmi le groupe consistant en talc, mica, montmorillonite, wollastonite, bentonite, silice, et phyllosilicate.

14. Composition de polyoléfine selon l'une quelconque des revendications 1, 5 à 13, dans laquelle la phase dispersée comprend un autre homo- ou copolymère d'oléfine (D) compatible avec l'homo- ou copolymère d'oléfine (A), l'homo- ou copolymère d'oléfine (D) étant choisi parmi des polyéthylènes à haute pression ou des plastomères d'éthylène à base de métallocène.

15. Composition de polyoléfine selon l'une quelconque des revendications précédentes, où les groupes hydrolysables contenant du silicium sont introduits dans l'homo- ou copolymère d'oléfine (A) par copolymérisation avec un composé du silicium insaturé représenté par la formule :
R¹SiR ²_{q}Y_{3-q} (IV)
où
R¹ est un groupe hydrocarbyle, hydrocarbyloxy ou (méth)acryloxy hydrocarbyle à insaturation éthylènique,
R² est un groupe hydrocarbyle aliphatique saturé,
Y qui peut être identique ou différent, est un groupe organique hydrolysable et
q est 0, 1 ou 2.

16. Composition de polyoléfine selon l'une quelconque des revendications précédentes, laquelle composition a été soumise à la présence d'humidité.

17. Composition de polyoléfine selon l'une quelconque des revendications précédentes, laquelle composition présente une résistance au choc à +23°C d'au moins 5,5 kJ/m² dans un test de Charpy avec entaille selon la norme ISO 179 1eA.

18. Composition de polyoléfine selon l'une quelconque des revendications précédentes, laquelle composition présente une résistance au choc à -20°C d'au moins 2,0 kJ/m², dans un test de Charpy avec entaille selon la norme ISO 179 1eA.

19. Composition de polyoléfine selon l'une quelconque des revendications précédentes, laquelle composition présente un module de flexion non inférieur à 950 MPa, mesuré selon la norme ISO 178.

20. Composition de polyoléfine selon l'une quelconque des revendications précédentes, laquelle composition présente un allongement à la rupture d'au moins 10 %, mesuré selon la norme ISO 527.

21. Composition de polyoléfine selon la revendication 20, laquelle composition présente un allongement à la rupture d'au moins 20 %, mesuré selon la norme ISO 527.

22. Composition de polyoléfine selon l'une quelconque des revendications précédentes, laquelle composition présente une résistance à la rayure, exprimée par delta (L) d'au moins 3,5, de préférence d'au moins 4,0.

23. Article fait de la composition de polyoléfine selon l'une quelconque des revendications 1 à 22.

24. Utilisation de la composition de polyoléfine selon l'une quelconque des revendications 1 à 22 pour la production d'un article.
